Europäisches Patentamt

European Patent Office

Office européen des brevets

(19)

(11) EP 1 167 094 A1

(12) EUROPÄISCHE PATENTANMELDUNG

(43) Veröffentlichungstag:
02.01.2002 Patentblatt 2002/01

(51) Int Cl.⁷: **B60G 17/015**, B60G 11/27

(21) Anmeldenummer: 01114202.3

(22) Anmeldetag: 12.06.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.06.2000 DE 10029332**

(71) Anmelder: **Continental Aktiengesellschaft**
**30165 Hannover (DE)**

(72) Erfinder:
• **Grünberg, Heiko**
**31303 Burgdorf (DE)**
• **Hartmann, Klaus-Heiner**
**31535 Neustadt (DE)**
• **Massmann, Carsten, Dr.**
**30177 Hannover (DE)**
• **Stahmer, Reinhard**
**30419 Hannover (DE)**

(54) **Messung des Beladungszustandes eines Kraftfahrzeuges**

(57) Um schnell und preiswert eine Information über den Beladungszustand eines Fahrzeuges, insbesondere eines Nutzfahrzeuges mit zumindest einer luftgefederten Achse, zu liefern wird vorgeschlagen, einen Sensor zur Erfassung des Balgdruckes und einen weiteren Sensor zur Erfassung des Einfederweges an jeder der in den Radaufhängungen des Fahrzeuges verwendeten Luftfedern anzuordnen und sowohl das Druck als auch das Federsignal in einer elektronischen Rechenvorrichtung weiterzuverarbeiten. Dabei werden vorzugsweise zunächst die Federkräfte, dann die Radkräfte und schließlich die Schwerpunktlage sowie das Gesamt- und/oder Ladungsgewicht berechnet und angezeigt.

Die Information über den Beladungszustand wird vorzugsweise auch als Eingangsgröße für weitere Sicherheitssysteme benutzt, zum Beispiel zur Absenkung einer Liftachse, zur Abgabe einer Warnung und/oder zur bedarfsgerechten Geschwindigkeitsdrosselung. Sie kann auch zur Dokumentation einer Fahrzeugbelastung und/oder eines Unfallgeschehens verwertet werden.

FIG. 1

EP 1 167 094 A1

FIG. 2

# EP 1 167 094 A1

**Beschreibung**

Der Begriff "Beladungszustand" spricht nicht nur die Höhe des tatsächlichen Gesamtgewichtes eines Fahrzeuges an, sondern auch die Verteilung dieses Gesamtgewichtes auf die verschiedenen Achsen und deren Räder. Beispielsweise kann das tatsächliche Gesamtgewicht unterhalb des höchstzulässigen liegen und dennoch sind einzelne Räder oder ist ein einzelnes Rad überlastet infolge einer ungünstigen Lastverteilung. Ein solcher Beladungszustand verschlechtert die Betriebssicherheit des betreffenden Fahrzeuges, nämlich:

1.   Der Bremsweg verlängert sich durch die ungleichmäßige Auslastung.
2.   Beim Bremsen entsteht ein Giermoment um die Hochachse zu der Seite hin, die der überlasteten Seite gegenüber liegt, was die Kursstabilität verschlechtert.
3.   Die Wank- und Kippstabilität ist zu der Seite hin reduziert, wo die Überlastung vorliegt.
4.   Die Wahrscheinlichkeit einer Reifenpanne, eines Radlagerversagens und einer Bremsbelagverglasung durch Überhitzung steigt an der überlasteten Radposition.

Ferner senkt eine ungleichmäßige Auslastung der Tragfähigkeit der einzelnen Achsen eines Fahrzeuges auch die Lebensdauer der Straßen. Aus diesen Gründen schreiben die meisten Staaten für Fahrzeuge nicht nur das jeweilig zulässige Gesamtgewicht sondern auch die jeweilig zulässige Achslast vor. So ist für Nutzfahrzeuge in Deutschland beispielsweise auf der oder den Hinterachsen eine Achslast von nur maximal 9,5 t zulässig, wenn diese Achse blattgefedert ist; hingegen darf diese Achse 11,5 t tragen, wenn sie als "straßenschonend" anerkannt ist, eine Anerkennung, die sie nur mit einer Luftfederung erreichen kann.

Nach einer aktuellen Untersuchung des deutschen Bundesmininsteriums für Verkehr sind aber in 30% der kontrollierten Fälle die Hinterachsen von Nutzfahrzeugen, insbesondere von Sattelzugmaschinen, überlastet, haben also noch mehr Last als die ohnehin schon großzügig erlaubten 11,5 t. Dabei wird häufig beobachtet, dass andere Achsen des gleichen Nutzfahrzeuges oder Gespannes nicht ausgelastet sind. Die Überwachung einer maximal zulässigen Achslast oder noch besser der maximal zulässigen Radlast ist unbeliebt, weil sie Zeit und Geld kostet. Außerdem sind Waagen nur an wenigen Stellen verfügbar und in der Regel so weich, dass eine Achslast- oder gar Radlastmessung infolge der statischen Überbestimmung nur schwer möglich ist.

Sowohl die aufgezeigten Gefahren als auch das entgegenstehende wirtschaftliche Interesse sind besonders groß bei Nutzfahrzeugen, wo

-   die Schwankungen zwischen Leerfahrt und beladener Fahrt besonders heftig sind,
-   die Unzuverlässigkeit der Gewichtsangabe einer Ladung besonders groß ist
-   weil der Fahrer nicht selbst auflädt und
-   der Aufladende ein Eigeninteresse an einer geringen Gewichtsangabe für die Frachtratenberechnung hat -
-   der Schwerpunkt im Verhältnis zur Spurweite hoch liegt, wodurch die Wank- und vor allem die Kippstabilität niedriger liegt als bei den meisten PKW,
-   und der verfügbare Reibungsbeiwert aufgrund des höheren Luftdruckes und der dementsprechend höheren Flächenpressung regelmäßig niedriger liegt als bei PKW.

Nutzfahrzeuge - sowohl LKW, als auch Busse, Anhänger, Sattelzugmaschinen, Sattelauflieger und Sonderfahrzeuge wie Rettungs- und Feuerwehrfahrzeuge - sind häufig mit Luftfedern an einer oder mehreren oder allen Achsen ausgerüstet. Bei PKW ist der Anteil von Luftfederungen zwar noch gering, steigt aber.

Aufgabe der Erfindung ist es, für luftgefederte Fahrzeuge eine Vorrichtung, nachfolgend auch als "System" bezeichnet, bereit zu stellen, die auf zuverlässige, schnelle und preiswerte Art eine Information über den Beladungszustand liefert. Vorzugsweise sollte sie den Beladungszustand auch dokumentieren, um für die Aufklärung eventuell auftretender Schadensfälle oder Unfälle als Beweismittel verfügbar zu sein. Um eine Verlängerung von Fahrzeugaufenthalten möglichst zu vermeiden, wird eine Informationsbeschaffungsmöglichkeit vorzugsweise auch für den Fahrbetrieb bereit gestellt.

Die Aufgabe wird erfindungsgemäß durch die Merkmale des Anspruches 1 gelöst. Ein wesentliches Element dieser Lösung ist die Anordnung eines Sensors zur Erfassung des Balgdruckes und eines weiteren Sensors zur Erfassung des Einfederweges an jeder der in den Radaufhängungen des Fahrzeuges verwendeten Luftfedern. Der Druck und der Federweg in den Luftfedern wird von einer elektronischen Rechenvorrichtung, nachfolgend im Jargon der Fachleute auch "ECU" (für Electronic Control Unit) genannt, weiterverarbeitet.

Der Zusammenhang zwischen Druck und auftretender Kraft in der Luftfeder ist zwar streng monoton aber nicht linear, weil die Fläche auf die der Druck wirkt, konstruktiv bedingt in Abhängigkeit von der Einfederung schwankt. Dennoch ermöglicht die Erfindung - nach der Messung des Druckes und des Einfederweges - aus diesen Daten online auf die wirkende Federkraft zu schließen.

Dazu muss aber zunächst eine mathematische Funktion ermittelt und in der ECU hinterlegt werden, die für den bestimmten Federtyp - analog einer Eichkurve - die wirksame Fläche in Abhängigkeit vom Einfederweg beschreibt. Wird nach dieser Vorbereitung der Einfederweg in die ECU eingegeben, dann ist die aktuelle Querschnittsfläche bekannt und zusammen mit dem weiterhin eingegebenen Druck kann die von der Luftfeder übertragene Kraft bestimmt werden. Dieser Gedankengang lässt sich in einer Formel wie folgt darstellen:

$$F = p \cdot A(e)$$

wobei "F" die zu berechnende Kraft, "p" den gemessenen Luftdruck in der Luftfeder und "A" die in der Luftfeder wirksame Querschnittsfläche in Abhängigkeit von dem Einfederweg "e" symbolisiert. Hiermit wird in der ECU die von jeder Luftfeder ausgeübte Kraft bestimmt.

Weil die Lastschwankungen an der Vorderachse in der Regel wesentlich geringer sind als an der Hinterachse und weil ihre absolute Tragfähigkeit in aller Regel auch geringer ist als an der Hinterachse oder an den Hinterachsen, sind Vorderachsen von Nutzfahrzeugen häufig mit einer billigeren Blattfederung und nicht mit einer Luftfederung ausgestattet. Für die Erkennung des Beladungszustandes des Fahrzeuges müssen auch von dieser Achse die wirkenden Federkräfte ermittelt werden. Dies gelingt in an sich bekannter Weise zum Beispiel durch Anbringung von Dehnungsmessstreifen auf beiden Blattfedern oder durch eine elektrische Spannungsmessung an einer piezokristallinen Schicht, die zwischen Blattfeder und Achskörper oder zwischen Blattfeder und Federaufnahme am Rahmen anzuordnen ist oder durch eine Messung des Einfederweges, wenn die Steifigkeit (auch "Federkonstante" genannt) der betreffenden Blattfeder bekannt ist. Mit einer solchen Kraftmessung an den Luftfedern und ggf. auch an den Blattfedern ist bereits eine Anzeige eventuell überlasteter Räder möglich. Vorzugsweise wird für den Fall einer Radüberlastung zumindestens ein weiteres Sicherheitssystem aktiviert.

Für den Fall, dass das Fahrzeug über eine Liftachse verfügt, diese geliftet ist und die erkannte Radüberlastung in der Nähe der Liftachse vorliegt, könnte das Sicherheitssystem damit antworten, die Liftachse herabzulassen, also zur Lastaufnahme mit heranzuziehen. Zumindest dort, wo vorgenannte Antwort nicht möglich ist - sei es, weil die Liftachse bereits herabgelassen ist, oder weil die Überlastung an einer anderen Radposition vorliegt, oder weil gar keine Liftachse existiert - sollte das Sicherheitssystem zunächst eine Warnung abgeben. Und zwar sollte für ganz geringfügige Überlastungen - etwa bis 2 % - nur eine visuelle Anzeige erfolgen. Bei größeren Überlastungen sollte neben einer visuellen Anzeige - die meistens emotional am wenigsten beachtet wird - eine akustische Warnung an den Fahrer erfolgen. Weiter bevorzugt steigt deren Penetranz mit zunehmender Überlastung.

Darüberhinaus ist es sinnvoll, etwa ab einer Überlastung von 5 % die erreichbare Höchstgeschwindigkeit des Fahrzeuges elektronisch herabzusetzen, beispielsweise ab 5% Überlastung auf 70 km/h, ab 10% Überlastung auf 60 km/h, ab 15% Überlastung auf 50 km/h, ab 20% Überlastung auf 30 km/h, ab 25% Überlastung auf 10 km/h und ab 30% Überlastung die Unlösbarkeit der Feststellbremse zu bewirken, sodass erst gar nicht losgefahren werden kann.

Vorzugsweise werden die Daten über die Luftfederkräfte aber auch noch zur Lösung weiterer Aufgaben verwertet. Und zwar wünschen der Fahrer, der Beladende und der Spediteur ferner eine Information über die Lage des aktuellen Fahrzeugschwerpunktes in der horizontalen Ebene. Zur Lösung dieser weiteren Aufgabe werden alle zuvor ermittelten Daten über die Federkräfte in der ECU in der Weise miteinander verknüpft, wie dies das Gleichgewicht der Vertikalkräfte und der davon erzeugten Drehmomente erfordert. Ausgehend von dem folgenden Kräfteplan für ein Fahrzeug mit zwei Achsen und dementsprechend vier 4 Federn lauten die Gleichgewichtsbedingungen wie folgt:

$$\Sigma F = 0 = F_{R1} + F_{R2} + F_{R3} + F_{R4} - F_g$$

mit

$$F \cdot y_S = (F_{R3} + F_{R4}) \cdot \ell$$

ergibt

$$\Sigma M = 0 = x_S \cdot F_{R3} - (s_{12} - x_S) \cdot F_{R4} + F_{R1} \cdot (x_S + \frac{S_{34} - S_{12}}{2}) - F_{R2} \cdot (s_{12} - x_S + \frac{S_{34} - S_{12}}{2})$$

$$y_S = \frac{(F_{R3} + F_{R4}) \cdot \ell}{F_{R1} + F_{R2} + F_{R3} + F_{R4}}$$

$$x_S = \frac{(F_{R2} + F_{R4}) \cdot S_{12} + (F_{R2} - F_{R1}) \cdot \frac{S_{34}}{2} + (F_{R1} - F_{R2}) \cdot \frac{S_{12}}{2}}{F_{R1} + FR_2 + FR_3 + FR_4}$$

Die Federspurbreite, dies ist der axiale Abstand zwischen den Mittellinien der beiden Federn einer Achse, ist an der Vorderachse mit "$S_{12}$" und an der Hinterachse mit "$S_{34}$" bezeichnet. In der Fahrtrichtung ist der Abstand zwischen den Federn einer Fahrzeugseite mit "$\ell$" bezeichnet und meistens gleich dem Radstande. Die Schwerpunktskoordinate $y_S$ scheint übrigens in allen nachfolgenden Ausführungen nicht nach links gezählt zu sein wie dargestellt, sondern nach rechts; dieser Skizzenfehler soll nachträglich korrigiert werden.

Zweckmäßigerweise wird die so gewonnene Information über die Lage des Schwerpunktes auf einem Display angezeigt. Zwecks leichter Verständlichkeit sollten auf dem Display in dünner Linie die Fahrzeugumrisse und die Räder in der Draufsicht maßstabsgerecht eingeblendet werden und fett - zum Beispiel in Rot - markiert der tatsächliche Schwerpunkt. Vorteilhafterweise wird auf dem Display - vorzugsweise in Grün - auch die Lage angezeigt, wo der Schwerpunkt am Besten liegen sollte, um alle Radpositionen möglichst gleichmäßig auszulasten. Unter gleichmäßiger Auslastung wird dabei eine solche Verteilung der einzelnen Radlasten verstanden, dass für jede Radposition gilt, dass das Verhältnis von tatsächlicher Radlast zur maximal zulässigen Radlast gleich ist.

Das gleichzeitige Anzeigen von tatsächlicher und optimaler Schwerpunktlage ermöglicht es, die Ladung so zu verteilen, dass der tatsächliche Schwerpunkt näher dem Optimum liegt. Dadurch lässt sich das tatsächliche besonders dicht an das höchstzulässige Fahrzeuggesamtgewicht annähern, also mehr Fracht pro Fahrt befördern, und die größtmögliche Fahrzeugsicherheit und der geringstmögliche Verschleiß erreichen.

Durch Bestimmung des Gesamtgewichtes $F_g$ des Fahrzeuges und Beobachtung seiner Schwerpunktlage ($y_s$, $x_s$) lässt sich bei Kenntnis des Leergewichtes und dessen Schwerpunktlage - wobei das "Leergewicht" für diesen Zweck auch den Treibstoffvorrat mitenthalten sollte - das Gewicht der Nutzlast und die Position ihres Schwerpunktes bestimmen. Dergleichen kann auch für eine kaufmännische Buchführung interessant sein.

Zwillingsbereifte Räder werden im Rahmen dieser Anmeldung als eine einzige Radposition aufgefasst.

Die Erfindung wird nachfolgend anhand zweier Ausführungsbeispiele näher erläutert, welches mit jeweils drei Figuren illustriert wird. Unbeschadet dessen, dass diese beiden Beispiele die beiden heutzutage in Europa häufigsten Konstellationen zeigen, ist die Erfindung auch bei jeder anderen Achskonstellation anwendbar. Von den Figuren zeigt

Fig. 1          schematisch einen LKW mit vorderer blattgefederter Achse und hinterer luftgefederter Achse in der Seitenansicht,

Fig. 2          den gleichen LKW in der Draufsicht im gleichen Abbildungsmaßstabe samt Bezeichnung der Maße, die in den Rechner als konstante Parameter eingegeben werden müssen,

Fig. 3a und 3b     das vollständige Datenflussdiagramm für dieses erste Ausführungsbeispiel, sowie

Fig. 4          schematisch einen Sattelzug mit zweiachsiger Zugmaschine und einachsigem Sattelauflieger in der Seitenansicht,

Fig. 5          den gleichen Sattelzug wie Figur 4 in der Draufsicht im gleichen Abbildungsmaßstabe samt Bezeichnung der Maße, die in den Rechner als konstante Parameter eingegeben werden müssen, und

Fig. 6a und 6b     das vollständige Datenflussdiagramm für dieses zweite Ausführungsbeispiel.

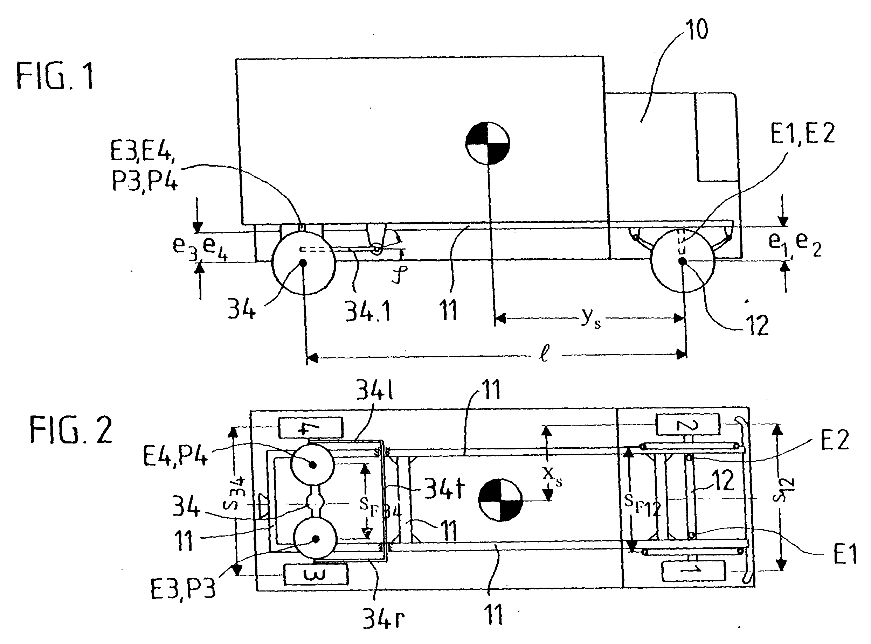

**Figur 1** zeigt schematisch einen LKW 10 mit einem aus I-Stahlprofilen zusammengeschweißten Rahmen 11, vorderer blattgeffederter Achse 12 und hinterer luftgefederter Achse 34 in der Seitenansicht. An der Vorderachse 12 befinden sich zwei Räder 1 und 2, wie in der zugeordneten **Figur 2** erkennbar, die den gleichen LKW in der Draufsicht zeigt. Analog sind die Hinterräder der Hinterachse 34 mit den Bezugszeichen 3 und 4 angesprochen. Die beiden Figuren 1 und 2, die im folgenden Text einheitlich behandelt werden, bedienen sich beide des gleichen Abbildungsmaßstabes.

Die Hinterachse 34 verfügt - wie bei luftgefederten Achsen üblich - über einen Querstabilisator 34.1 und ist gegliedert in einen linken Krafteinleitungsarm $34\ell$, einen rechten Krafteinleitungsarm 34r und ein dazwischen angeordnetes Torsionsrohr 34t. Die beiden Krafteinleitungsarme $34\ell$ und 34r übernehmen bei diesem Ausführungsbeispiel auch gleichzeitig die Radführung, um das Gewicht für separate Längslenker zu sparen.

Der LKW 10 verfügt über insgesamt 6 Sensoren und zwar
den Wegsensor E1 zur Messung des Einfederweges $e_1$ in der Nähe des Rades 1,
den Wegsensor E2 zur Messung des Einfederweges $e_2$ in der Nähe des Rades 2,
den Wegsensor E3 zur Messung des Einfederweges $e_3$ in der Nähe des Rades 3,
den Wegsensor E4 zur Messung des Einfederweges $e_4$ in der Nähe des Rades 4,
den Drucksensor P3 zur Messung des Luftfederdruckes $p_3$ in der Nähe des Rades 3 und den Drucksensor P4 zur Messung des Luftfederdruckes $p_4$ in der Nähe des Rades 4.

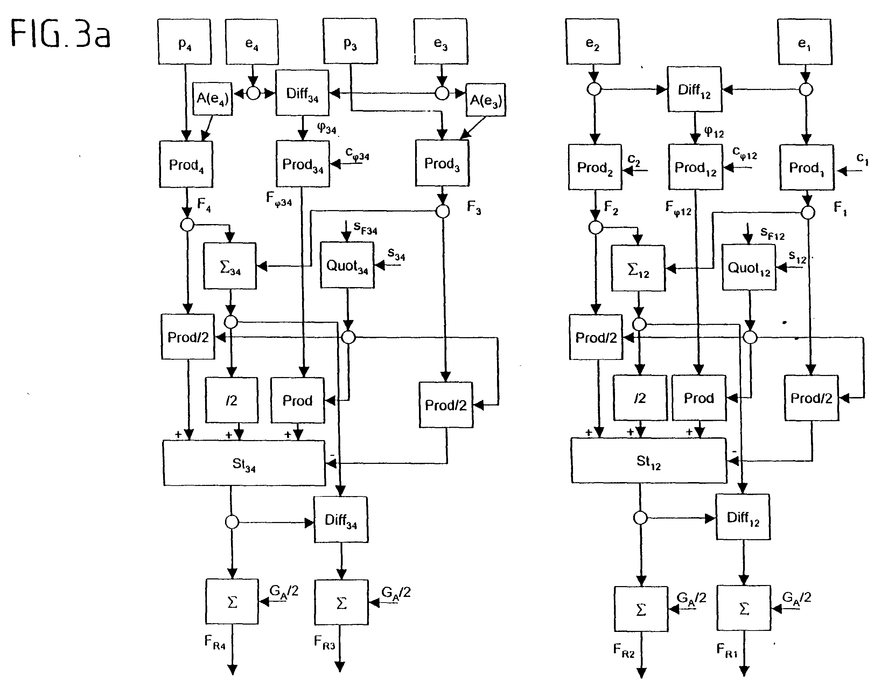

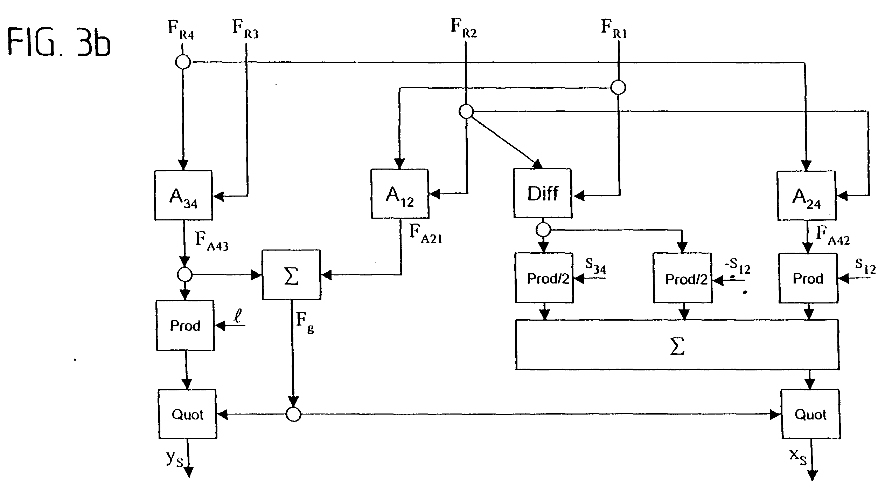

Der Torsionswinkel $\varphi_{34}$ des Torsionsrohres 34t braucht nicht eigens gemessen zu werden, sondern wird bevorzugt - wie in dem in Figur 3 gezeigten Datenflussdiagramm dargestellt - aus der Differenz der beiden Einfederwege $e_3$ und $e_4$ bestimmt.

Neben den konstanten Fahrzeugabmessungen

$\ell$          für den Radstand,
$S_{12}$       für die Spurweite an der Vorderachse 12,
$S_{34}$       für die Spurweite an der Hinterachse 34 (wobei bei der häufigen Zwillingsbereifung von der Mitte zwischen den beiden Reifen der linken Radposition bis zur Mitte zwischen den beiden Reifen der rechten Radposition zu messen ist),
$S_{F12}$      für die - axiale - Weite zwischen den beiden Blattfedern der Vorderachse 12
$S_{F34}$      für die - axiale - Weite zwischen den beiden Luftfedern der Hinterachse 34,

den Steifigkeiten

$c_{12}$      für die Steifigkeit der Blattfedern der Vorderachse 12 - die hier der Einfachheit halber als über dem Federwege konstant angesehen ist -

$c_{\varphi34}$      für die Steifigkeit des Querstabilisators an der Hinterachse 34

und der für die Erfindung besonders wesentlichen Funktion

$A(e)_{34}$      der Querschnittsfläche der Luftfedern der Hinterachse 34 - die üblicherweise für beide Luftfedern einer Achse identisch ist und deshalb hier auch so angenommen ist -

werden die variabelen Messwerte der oben aufgezählten sechs Sensoren in die zentrale Recheneinheit ECU eingeleitet.

**Figur 3a** zeigt das Diagramm des Datenflusses in der ECU für dieses erste Ausführungsbeispiel von Anfang an - also von der in der ersten Zeile dargestellten Einleitung der variabelen Daten $e_1$, $e_2$, $e_3$, $e_4$, $p_3$ und $p_4$ - bis zur Berechnung der vier Radkräfte $F_{R1}$ bis $F_{R4}$. **Figur 3b**, die man unten an Figur a ankleben könnte, zeigt die weitere Verarbeitung der Daten bis zur Berechnung der Koordinaten $x_s$ und $y_s$ des Schwerpunktes des Gesamtfahrzeuges, also einschließlich seiner Nutzlast. Beide Figuren3a und 3b, die Teile eines zusammenhängenden Datenflussdiagrammes sind, werden im Folgenden zusammen beschrieben. Dabei meint ein "o" eine Datenverzweigung ohne sonstige Bearbeitung.

Der rechte Teil der Figur 3a befasst sich mit der Vorderachse 12, während der linke Teil sich mit der Hinterachse 34 befasst. Zunächst zum rechten Teil:

Die beiden Einfederwege $e_1$ und $e_2$ sind an ein in der zweiten Zeile des Diagrammes gezeigten Differenzglied "Diff$_{12}$" angeschlossen, welches ein zur Verwindung eines eventuell vorhandenen Querstabilisators proportionales Signal liefert. Dieses Signal wird sodann in einen in der dritten Zeile gezeigten Multiplikator "Prod$_{12}$" eingeleitet zu-sammen mit der ggf. vorhandenen Federkonstanten $c_{\varphi12}$ für die Steifigkeit des eventuellen Querstabilisators an der Vorderachse 12; ist kein Querstabilisator an dieser Achse 12 vorhanden - so wie in den Figuren 1 und 2 übereinstimmend mit der häufig anzutreffenden Realität dargestellt - , so wird für $c_{\varphi12}$ eine Null eingegeben. Wenngleich die Existenz des zunächst beschriebenen Differenz- und anschließenden Multiplikationsgliedes für dieses Beispiel überflüssig ist, so hat sie doch einen Sinn, und zwar den, dass diese Datenverarbeitungsvorrichtung unabhängig von der Existenz eines Querstabilisators einsetztbar ist.

Von einer Verzweigungsstelle o ausgehend wird der aktuelle Einfederweg $e_1$ überdies in einen Multiplikator Prod$_1$ gegeben, der die Federkonstante $c_1$ der Feder in der Nähe des in Figur 2 sichtbaren Rades 1 gespeichert enthält und beide Daten miteinander multipliziert, was zur Federkraft $F_1$ führt. Analog dazu wird von einer hinter dem Eingang von $e_2$ platzierten Verzweigungsstelle o ausgehend der aktuelle Einfederweg $e_2$ in einen Multiplikator Prod$_2$ gegeben, der die Federkonstante $c_2$ der Feder in der Nähe des in Figur 2 sichtbaren Rades 2 gespeichert enthält und beide Daten miteinander multipliziert, was zur Federkraft $F_2$ führt. Damit liegen am Datenausgang der dritten Zeile bereits die Kräfte $F_1$ und $F_2$ der beiden Achsfedern sowie $F_{\varphi12}$ des eventuell vorhandenen Querstabilisators vor.

Im linken Teil liegen am Datenausgang der dritten Zeile ebenfalls bereits alle drei Kräfte der betreffenden, also hinteren Achse 34 vor, jedoch läuft die Verarbeitung etwas anders, weil diese Achse 34 sich über Luftfedern und nicht über Blattfedern gegenüber dem Fahrgestell abstützt. Noch in Analogie zum rechten Teil sind die beiden Einfe-derwege $e_3$ und $e_4$ an ein in der zweiten Zeile des Diagrammes gezeigtes Differenzglied "Diff$_{34}$" angeschlossen, wel-ches ein zur Verwindung des vorhandenen Querstabilisators - 43.1 in Figur 2 - proportionales Signal liefert. Dieses Signal wird sodann in einen in der dritten Zeile gezeigten Multiplikator "Prod$_{34}$" eingeleitet zusammen mit der Feder-konstanten $C_{\varphi34}$ für die Steifigkeit des Querstabilisators 34.1 an der Hinterachse 34.

Von einer Verzweigungsstelle o ausgehend wird der aktuelle Einfederweg $e_3$ überdies in einen Funktionsin-terpreter $A(e_3)$ gegeben, der die Funktion der wirksamen Querschnittsfläche der betreffenden Luftfeder in Abhängigkeit vom Einfederwege $e_3$ gespeichert enthält und damit aus dem Einfederwege $e_3$ die wirksame Querschnittsfläche $A_3$ bestimmt.

Die so bestimmte Querschnittsfläche $A_3$ wird sodann zusammen mit dem zu dem in der betreffenden Luftfeder herrschenden Druck $p_3$ proportionalen Signal in einen Multiplikator Prod$_3$ gegeben und beide Daten miteinander mul-tipliziert, was zur Federkraft $F_3$ führt.

Analog dazu wird von einer hinter dem Eingang von $e_4$ platzierten Verzweigungsstelle o ausgehend der ak-tuelle Einfederweg $e_4$ in einen Funktionsinterpreter $A(e_4)$ gegeben, der die Funktion der wirksamen Querschnittsfläche gespeichert enthält und aus dem Einfederwege $e_4$ die wirksame Querschnittsfläche $A_4$ bestimmt.

Die so bestimmte Querschnittsfläche $A_4$ wird sodann zusammen mit dem zu dem in der betreffenden Luftfeder herrschenden Druck $p_4$ proportionalen Signal in einen Multiplikator Prod$_4$ gegeben und beide Daten miteinander mul-tipliziert, was zur Federkraft $F_4$ führt.

Damit liegen am Datenausgang der dritten Zeile auch im linken Teil bereits die Kräfte $F_3$ und $F_4$ der beiden Achsfedern sowie $F_{\varphi 34}$ des Querstabilisators 34.1 vor. Es wird im Folgenden der Einfachheit halber angenommen, dass - wie auch häufig in der Realität - der Querstabilisator an der gleichen Stelle an der Achse angreift, wie auch die Achsfedern; weicht hingegen die Querstabilisatorweite von der Federspurweite ab, so lässt sich das entsprechende Verhältnis innerhalb der Eingabe der Federsteifigkeit $c_{\varphi 34}$ mitberücksichtigen.

Von hier ausgehend bis hin zur Bestimmung der Radkräfte $F_{R1}$, $F_{R2}$, $F_{R3}$, $F_{R4}$ am unteren Rande des Figurenteiles 3a ist die Datenverarbeitung im zuerst angesprochenen rechten Teil, der sich mit der Vorderachse 12 befasst, vollkommen analog zum zuletzt angesprochenen linken Teil, der sich mit der Hinterachse 34 befasst. Darum wird im Folgenden nur einer weiter beschrieben; willkürlich ist der rechte dafür ausgewählt:

Zur Berechnung von $F_{R2}$ werden zunächst die Daten $F_1$ und $F_2$ mittels je einer Verzweigungsstelle o verzweigt. Je eine dieser Zweigleitungen wird in ein Summenglied $\Sigma_{12}$ gekeitet und dort zur Summe $F_1$ plus $F_2$ zusammengesetzt. In einem Glied "/2" wird diese sodann durch 2 geteilt und so das arithmetische Mittel beider Federkräfte gebildet.

Die weiteren zur Berechnung von $F_{R2}$ zu berücksichtigenden Terme enthalten alle das Verhältnis der Federspurweite geteilt durch die Radspurbreite, hier rechts also $S_{F12}/S_{12}$. Dieses Verhältnis wird im Folgenden "Weitenverhältnis" genannt. Zur Bestimmung des Weitenverhältnisses der Vorderachse werden die beiden festen Fahrzeugmaße $S_{F12}$ und $S_{12}$ in ein Divisionsglied $Quot_{12}$ eingegeben.

Bei allen Operatorgliedern, die eine nicht-kommutative Rechenoperation ausführen, also Diff-Gliedern und Quot-Gliedern, ist die zuerst in einer entsprechenden Gleichung zu nennende Größe, also der Minuend bzw. der Dividend, als von oben hereingehend gezeichnet, während die als zweite zu nennde Größe, also der Subtrahend bzw. der Divisor, als seitlich in das Operationsglied hereingehend gezeichnet ist.

Dieses Weitenverhältnis wird in einem links (im rechten Teil) angeordneten Punktrechnungsglied "Prod/2" mit $F_2$ multiplziert und sodann durch 2 geteilt. Analog dem so bestimmten Term wird in einem rechts angeordneten weiteren Punktrechnungsglied "Prod/2" das Weitenverhältnis mit $F_1$ multiplziert und sodann ebenfalls durch 2 geteilt.

Sodann werden die bis hierher bestimmten vier Terme mittels eines Strichrechnungs-Operatoren "$St_{12}$" so zusammengesetzt, dass sich die Summe aus

1. dem arithmetischen Mittel $(F_1 + F_2)/2$,
2. Weitenverhältnis mal $F_2/2$,
3. Negativum von Weitenverhältnis mal $F_1/2$ und
4. Weitenverhältnis mal $F_{\varphi 12}$

ergibt. Diese Termzusammensetzung liefert ein Signal, das die Kraft am Rade 2 noch ohne den Eigengewichtsanteil der Achse 12 selber beschreibt. Es liegt an der Verzweigungsstelle o zwischen der letzten und der vorletzten Zeile dieser Figur 3a vor.

Dieses Signal wird in das in der vorletzten Zeile rechts angeordnete Differenzglied als Subtrahend eingeführt, während dort als Minuend $F_1 + F_2$ eingeführt wird. Damit liegt am Ausgang dieses Differenzgliedes ein Signal vor, welches die Kraft beschreibt, die am Rade 1 noch ohne Berücksichtigung des Eigengewichtsanteiles der Achse 12 angreift.

Zu beiden Signalen wird - zu sehen in der letzten Zeile - in jeweils einem Additionsgliec die Hälfte des Achseneigengewichtes $G_{A12}$ hinzuaddiert, wonach die Radkräfte $F_{R1}$ und $F_{R2}$ bestimmt sind. Wie schon geschireben, werden im linken Teil in völlig analoger Weise die Radkräfte $F_{R3}$ und $F_{R4}$ bestimmt; es ist jeweils nur der Index "1" durch "3" zu ersetzen und der Index "2" durch "4". Die bis hierher gewonnenen Daten reichen bereits aus, um einen Zweck der Erfindung zu erfüllen, nämlich vor einer Überlastung einzelner Räder zu warnen oder zu schützen. Dazu werden die ermittelten Radkräfte $F_{R1}$, $F_{R2}$, $F_{R3}$ und $F_{R4}$ mit den höchstzulässgen Radkräften verglichen.

Dieser Datenfluss findet seine Fortsetzung in der **Figur 3b.** Dieser Teil dient der Bestimmung der Koordinaten $x_s$ und $y_s$ des Schwerpunktes und verwirklicht die im oberen Drittel von Seite 5 dieser Beschreibung angegebenen Gleichungen.

Hier werden zunächst die Signale für FR2 und FR4 an je einer Verzweigungsstelle "o" verzweigt. In der zweiten Zeile sind drei Additionsglieder angeordnet, nämlich

$A_{34}$, welches die Summe "$F_{A43}$" aus den Kräften $F_{R4}$ und $F_{R3}$ bildet,
$A_{12}$, welches die Summe "$F_{A12}$" aus den Kräften $F_{R2}$ und $F_{R1}$ bildet und
$A_{24}$, welches die Summe "$F_{A42}$" aus den Kräften $F_{R4}$ und $F_{R2}$ bildet.

Ferner ist in dieser Zeile ein Subtraktionsglied "Diff" angeordnet, welches die Differenz $F_{R2}$ minus $F_{R1}$ bestimmt. Diese Differenz wird einmal verzweigt, wobei der linke Zweig in einem linken Gliede "Prod/2" zunächst mit der Spurweite $s_{34}$ der Hinterachse 34 multipliziert und anschließend durch 2 dividert wird, während der rechte Zweig in einem rechten Gliede "Prod/2" zunächst mit dem Negativum der Spurweite $s_{12}$ der Vorderachse 12 multipliziert und anschließend durch 2 dividert wird. Diese beiden Produkthälften werden genauso in ein unten rechts dargestelltes Summenglied Σ eingegeben wie das in einem ganzrechts in der Mitte angeordneten Gliede "Prod" bestimmte Produkt aus der Kraftsumme $F_{A42}$ und der Spurweite $s_{12}$ der Vorderachse 12. Das so bestimmte Summensignal wird sodann als Dividend in ein Divisionsglied "Quot" eingeführt, das unten rechts dargestellt ist.

Zur Bestimmung des Divisors werden in einem links angeordneten Additionsglied Σ die Kraftsummen $F_{A43}$ und $F_{A21}$ zum Gesamtgewicht $F_g$ zusammenaddiert und einmal verzweigt. Der rechte Zweig hiervon wird als Divisor in das Glied "Quot" unten rechts eingeführt und führt nach Ausführung der Division zur Koordinate $x_s$ des Schwerpunktes.

Die links erzeugte Kraftsummen $F_{A43}$ wird im linken Ast hinter ihrer Verzweigungsstelle "o" in ein linkes Glied "Prod" eingeleitet und mit dem Radstande "$\ell$" multipliziert. Dieses Produkt wird als Dividend in ein links angeordnetes Divisionsglied "Quot" eingeführt zusammen mit dem linken Zweig des Signales $F_g$ für das Gesamtgewicht als Divisor, was im Ergebnis die Längskoordinate $y_s$ des Schwerpunktes liefert.

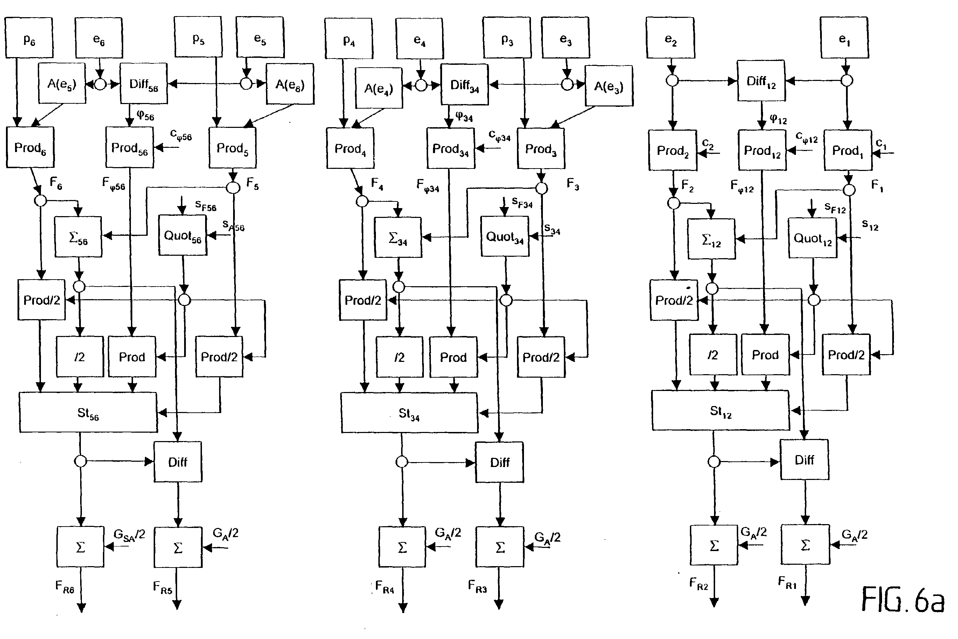

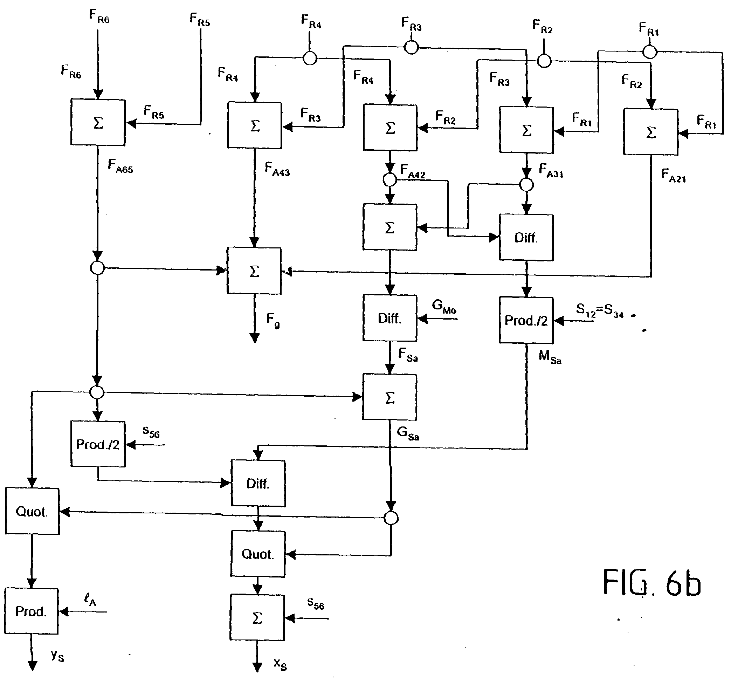

Wo immer sich in diesen Datenflussdiagrammen der Figuren 3a, 3b und 6a und 6b Datenleitungen kreuzen, sind die Kreuzungen als nichtleitend zu verstehen, es sei denn, es wäre das Symbol "o" für eine Verzweigung gesetzt.

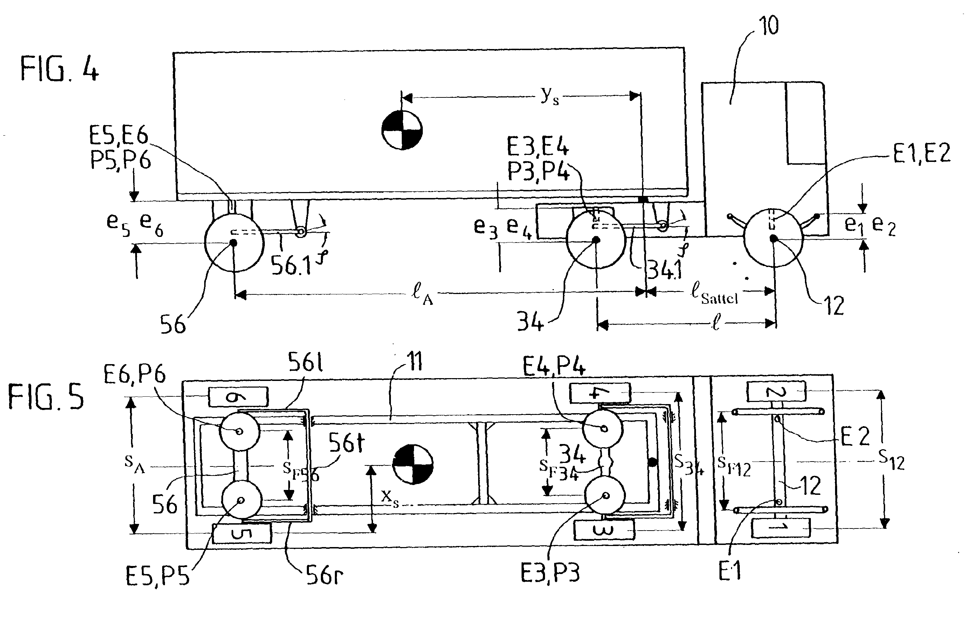

**Figur 4** zeigt schematisch einen Sattelzug mit zweiachsiger Zugmaschine 10 und einachsigem Sattelauflieger 100 in der Seitenansicht. Zwar hat die Zugmaschine typischerweise einen kürzeren Radstand $\ell$ als ein LKW mit Kofferaufbau, wie er in der Figur 1 dargestellt war, aber grundsätzlich ist die Konstruktion gleich, weshalb die gleichen Bezugszeichen verwendet werden konnten, zum Beispiel 1 und 2 für die beiden Vorderräder und 3 und 4 für die beiden Hinterräder, wonach die gesamte Radüberwachung und Schwerpunktbestimmung des Zugfahrzeuges in Übereinstimmung mit den Figuren 1, 2, 3a und 3b ausführbar ist und deshalb hier nicht noch einmal dargestellt wird.

Vielmehr befasst sich die Figur 4 - und genauso die zugeordnete **Figur 5** - primär mit der Überwachung des Sattelaufliegers 100 und der Bestimmung von dessen Schwerpunkt. Figur 5 zeigt den gleichen Sattelzug wie Figur 4 in der Draufsicht im gleichen Abbildungsmaßstabe samt Bezeichnung der Maße, die in den Rechner als konstante Parameter eingegeben werden müssen. Die blattgefederter Vorderachse der Zugmaschine mit den Rädern 1 und 2 ist als 12 , dessen Hinterachse mit den Rädern 3 und 4 als 34 und die Achse des Aufliegers mit den Rädern 5 und 6 als 56 bezeichnet. Die beiden Figuren 4 und 5 werden im Folgenden einheitlich beschrieben.

Analog der Hinterachse 34 der Zugmaschine 10 ist auch die Achse 56 des Sattelaufliegers 100 luftgefedert und verfügt über einen Querstabilisator 56.1 und ist gegliedert in einen linken Krafteinleitungsarm $56\ell$, einen rechten Krafteinleitungsarm 56r und ein dazwischen angeordnetes Torsionsrohr 56t. Die beiden Krafteinleitungsarme $56\ell$ und 56r übernehmen bei diesem Ausführungsbeispiel auch gleichzeitig die Radführung, um das Gewicht für separate Längslenker zu sparen.

DerSattelzug 10 + 100 verfügt über insgesamt 8 Sensoren und zwar
den Wegsensor E1 zur Messung des Einfederweges $e_1$ in der Nähe des Rades 1,
den Wegsensor E2 zur Messung des Einfederweges $e_2$ in der Nähe des Rades 2,
den Wegsensor E3 zur Messung des Einfederweges $e_3$ in der Nähe des Rades 3,
den Wegsensor E4 zur Messung des Einfederweges $e_4$ in der Nähe des Rades 4,
den Drucksensor P3 zur Messung des Luftfederdruckes $p_3$ in der Nähe des Rades 3,
den Drucksensor P4 zur Messung des Luftfederdruckes $p_4$ in der Nähe des Rades 4.
den Drucksensor P5 zur Messung des Luftfederdruckes $p_5$ in der Nähe des Rades 5 und den Drucksensor P6 zur Messung des Luftfederdruckes $p_6$ in der Nähe des Rades 6.

Der Torsionswinkel $\varphi_{56}$ des Torsionsrohres 56t braucht genausowenig eigens gemessen zu werden wie der Torsionswinkel $\varphi_{34}$ des Torsionsrohres 34t, sondern wird bevorzugt - wie in dem in Figur 6a gezeigten Datenflussdiagramm dargestellt - aus der Differenz der beiden Einfederwege $e_5$ und eg bzw. $e_3$ und $e_4$ bestimmt.

In der Figur 4 ist der Radstand des Zugfahrzeuges, also der Abstand von der Vorderachse 12 zur Hinterachse 34, mit "$\ell$" bezeichnet. Der Radstand des Aufliegers, also der Abstand vom Drehpunkt des Sattels bis zur nachlaufenden Achse 56 des Aufliegers, ist mit "$\ell_A$" bezeichnet.

Der Abstand von der Vorderachse 12 zum Drehpunkt des Sattels ist mit "$\ell_{Sattel}$" bezeichnet. Weil aber der Drehpunkt des Sattels bei den meisten Zugmaschinen nicht so weit nach vorne gesetzt ist, sondern sich nahezu exakt über der Hinterachse der Zugmaschine befindet, ist in dem Datenflussdiagramm der zugeordneten Figuren 6a und 6b $\ell_{Sattel} = \ell$ gesetzt; nur so konnte der Datenflussplan hinreichend kompakt gehalten werden, um auf DIN A4 Papier entsprechend den Anmeldevorschriften dargestellt werden zu können. Im Übrigen spielt diese geringfügige Abweichung in der Praxis kaum eine Rolle.

Neben den konstanten Fahrzeugabmessungen

$\ell$        für den Radstand des Zugfahrzeuges 10,

$\ell_A$      für den Radstand des Aufliegers 100,

$S_{12}$      für die Spurweite an der Vorderachse 12 der Zugmaschine 10,

$S_{34}$      für die Spurweite an der Hinterachse 34 der Zugmaschine 10 (wobei bei der häufigen Zwillingsbereifung von der Mitte zwischen den beiden Reifen der linken Radposition bis zur Mitte zwischen den beiden Reifen der rechten Radposition zu messen ist),

$S_{56}$      für die Spurweite an der Achse 56 des Aufliegers 100, an einigen Stellen - zugegebenermaßen inkonsequenterweise - auch als $s_A$ bezeichnet,

$S_{F12}$      für die - axiale - Weite zwischen den beiden Blattfedern der Vorderachse 12

$S_{F34}$      für die - axiale - Weite zwischen den beiden Luftfedern der Hinterachse 34,

$S_{F56}$      für die - axiale - Weite zwischen den beiden Luftfedern der Aufliegerachse 56,

den Steifigkeiten

$c_{12}$      für die Steifigkeit der Blattfedern der Vorderachse 12 - die hier der Einfachheit halber als über dem Federwege konstant angesehen ist -

$c_{\varphi 34}$      für die Steifigkeit des Querstabilisators an der Hinterachse 34

$c_{\varphi 56}$      für die Steifigkeit des Querstabilisators an der Aufliegerachse 56

und der für die Erfindung besonders wesentlichen Funktion

$A(e)_{34}$ der      Querschnittsfläche der Luftfedern der Hinterachse 34 - die üblicherweise für beide Luftfedern einer Achse identisch ist und deshalb hier auch so angenommen ist -

$A(e)_{56}$      der Querschnittsfläche der Luftfedem der Aufliegerachse 56 - die üblicherweise für beide Luftfedern einer Achse identisch ist und deshalb hier auch so angenommen ist -

werden die variabelen Messwerte der oben aufgezählten sechs Sensoren in die zentrale Recheneinheit ECU eingeleitet.

**Figur 6a** zeigt das Diagramm des Datenflusses in der ECU für dieses erste Ausführungsbeispiel von Anfang an - also von der in der ersten Zeile dargestellten Einleitung der variabelen Daten $e_1$, $e_2$, $e_3$, $e_4$, $e_5$, $e_6$, $p_3$, $p_4$, $p_5$ und $p_6$ - bis zur Berechnung der sechs Radkräfte $F_{R1}$ bis $F_{R6}$. **Figur 6b**, die man unten an Figur 6a ankleben könnte, zeigt die weitere Verarbeitung der Daten bis zur Berechnung der Koordinaten $x_s$ und $y_S$ des Schwerpunktes des Aufliegers inclusive seiner Nutzlast. Beide Figuren 6a und 6b sind Teile eines zusammenhängenden Datenflussdiagrammes. Die Symbole sind analog den Figuren 3a und 3b verwendet, was eine Wiederholung der zugehörigen Beschreibung erübrigt.

Zur Steigerung der Übersichtlichkeit, die eine gewisse Vereinfachung erforderte, um mit dem DIN A4 Format auskommen zu können, wurde hier die Spurweite an den Achsen 12 uns 34 als gleich angesehen. Wo diese Vereinfachung zu zu großer Ungenauigkeit führen würde, kann der Fachmann die entsprechenden Teile des Datenflussplanes durch solche gemäß den Figuren 3a und 3b ersetzen.

In Figur 6b ist mir $G_{Mo}$ das Gewicht der Zugmaschine 10 gemeint, mit $M_{Sa}$ das am Sattel übertragene Rollmoment um die Fahrzeuglängsachse und mit $F_{Sa}$ die am Sattel übertragene vertikale Kraft.

**Patentansprüche**

1. Vorrichtung zur Messung der von einer Luftfeder übertragenen Kraft,
   **dadurch gekennzeichnet,**

   - **dass** innerhalb der Luftfeder ein Sensor zur Erfassung des jeweiligen Balgdruckes (p) angeordnet ist,
   - **dass** in oder in der Nähe der Luftfeder ein weiterer Sensor (E) zur Erfassung des Einfederweges (e) angeordnet ist,
   - **dass** zur Vorrichtung eine elektronische Rechenvorrichtung (ECU) gehört,
   - in welche (ECU) die beiden Daten über den Balgdruck (p) und den Einfederweg (e) eingespeist werden und
   - in welcher (ECU) für eine Funktion gespeichert ist, welche die wirksame Luftfeder-Querschnittsfläche (A) in Abhängigkeit vom Einfederweg (e) der jeweiligen Luftfeder beschreibt,
   - wobei diese Vorrichtung allein aus diesen Daten die von der Luftfeder übertragene Kraft berechnet.

2. Vorrichtung zur Messung des Beladungszustandes eines luftgefederten Fahrzeuges (10) - vorzugsweise eines Nutzfahrzeuges - mit mindestens 4 Radpositionen (1, 2, 3, 4), die auf mindestens 2 Achsen (12, 34) verteilt sind und mit Luftfedern an mindestens einer der Achsen (34),
**dadurch gekennzeichnet,**

- **dass** innerhalb einer jeden Luftfeder ein Sensor (P) zur Erfassung des jeweiligen Balgdruckes (p) angeordnet ist,
- **dass** in oder in der Nähe einer jeden Luftfeder ein weiterer Sensor (E) zur Erfassung des Einfederweges (e) angeordnet ist,
- **dass** zur Vorrichtung eine elektronische Rechenvorrichtung (ECU) gehört,
- in welche (ECU) von jeder Luftfeder die beiden Daten über den Balgdruck (p) und den Einfederweg (e) eingespeist werden und
- in welcher (ECU) für jede der verwendeten Luftfedern eine Funktion gespeichert ist, welche die wirksame Luftfeder-Querschnittsfläche (A) in Abhängigkeit vom Einfederweg (e) der jeweiligen Luftfeder beschreibt,
- wobei diese Vorrichtung allein aus diesen Daten für jede Luftfeder die übertragene Federkraft berechnet,
- wobei auch die übertragenen Kräfte der ggf. vorhandenen anderen Federn bestimmt werden,
- wobei in der elektronischen Rechenvorrichtung (ECU) aus diesen Daten über alle Federkräfte unter Verwendung gespeicherter Daten über die Federspurweiten und Achsspurweiten für jede Radposition die tatsächliche Radlast berechnet wird und
- im Falle der Berechnung einer Überlastung einer oder mehrerer Radpositionen zumindest eine - visuelle oder akustische - Warnung abgibt und/oder ein anderes Sicherheitssystem aktiviert.

3. Vorrichtung nach Anspruch 2, **dadurch gekennzeichnet, dass** sie eingebaut ist in ein Fahrzeug (10), das über eine Liftachse verfügt, und dass die Vorrichtung ein Sicherheitssystem enthält, das bei Erkennen einer Überlastung einer Radposition in der Nähe der Liftachse die Liftachse herablässt, also zur Lastaufnahme mit heranzieht.

4. Vorrichtung nach Anspruch 2, **dadurch gekennzeichnet, dass** bei Berechnung einer ganz geringfügigen Überlastung - etwa bis 2 % - einer Radposition nur eine visuelle Warnanzeige erfolgt, während bei größeren Überlastungen stattdessen oder zusätzlich ein akustisches Warnsignal erzeugt wird.

5. Vorrichtung nach Anspruch 4, **dadurch gekennzeichnet, dass** die Penetranz des Warngeräusches mit zunehmender Überlastung steigt.

6. Vorrichtung nach Anspruch 2, **dadurch gekennzeichnet, dass** sie ab Detektion einer Überlastung einer Radposition von etwa 5 % die erreichbare Höchstgeschwindigkeit des Fahrzeuges, in das sie eingebaut ist, elektronisch herabsetzt.

7. Vorrichtung nach Anspruch 2 oder 6, **dadurch gekennzeichnet, dass** sie ab Detektion einer ganz gravierenden Überlastung einer Radposition - zum Beispiel ab 30% Überlastung - die Unlösbarkeit der Feststellbremse bewirkt.

8. Vorrichtung nach Anspruch 2, **dadurch gekennzeichnet, dass** sie zur Errechnung der Koordinaten $(x_s, y_s)$ des Schwerpunktes S des Fahrzeuges (1) in einer horizontalen Ebene alle gemäß Anspruch 1 ermittelten Daten über die Luftfederkräfte in der elektronischen Rechenvorrichtung (ECU) miteinander verknüpft.

9. Vorrichtung nach Anspruch 8, **dadurch gekennzeichnet, dass** sie auf einem Display die Lage des tatsächlichen Schwerpunktes des Fahrzeuges (1) in Relation zu den Umrissen des Fahrzeuges (1) und/oder dessen (1) Radpositionen in der Draufsicht anzeigt.

10. Vorrichtung nach Anspruch 8, **dadurch gekennzeichnet, dass** sie anzeigt, um welche Wegstrecke in welcher Richtung der tatsächliche Schwerpunkt (S) verschoben werden muss, um die Schwerpunktlage zu erreichen, bei der alle Radpositionen gleichmäßig ausgelastet wären, das heißt, dass für jede Radposition gälte, dass das Verhältnis von tatsächlicher Radlast zur maximal zulässigen Radlast gleich ist.

11. Vorrichtung nach Anspruch 2, **dadurch gekennzeichnet, dass** sie in einem Fahrzeug eingebaut ist, dessen maximal zulässiges Gesamtgewicht kleiner als die Summe aller maximal zulässigen Radlasten ist, **dadurch gekennzeichnet, dass** sie die Summe aller tatsächlichen Radlasten in der elektronischen Rechenvorrichtung (ECU) berechnet, diese Summe mit dem dort gespeicherten höchstzulässigen Gesamtgewicht des Fahrzeuges (1) vergleicht und bei Überschreitung des höchstzulässigen Gesamtgewichtes zumindest eine - visuelle oder akustische - Warnung abgibt und/oder ein anderes Sicherheitssystem aktiviert.

12. Vorrichtung nach den Ansprüchen 2 und 8, **dadurch gekennzeichnet, dass** sie bei einer Lage des Fahrzeugschwerpunktes (S) deutlich beabstandet von der Fahrzeuglängsachse eine Warnung vor bestehender Kippgefahr abgibt und/oder ein anderes Sicherheitssystem bewirkt, vorzugsweise den höchstmöglichen Lenkeinschlagwinkel in weiterer Abhängigkeit von der Fahrzeuggeschwindigkeit so weit begrenzt, das ein Kippen des Fahrzeuges nicht durch Fehler des Fahrers herbeigeführt werden kann.

13. Vorrichtung nach den Ansprüchen 2 und 8, vorzugsweise nach Anspruch 12,
**dadurch gekennzeichnet, dass** sie die Kippgefahr während der Fahrt überwacht und/oder verhindert, wozu an zumindetens einer luftgefederten Achse auch während der Fahrt die Kraft der linken Luftfeder mit der der rechten Luftfeder oder die Radlasten links und rechts miteinander verglichen werden und ab einer Schwelle - vorzugsweise ab dann, wenn die eine der beiden Lasten mehr als das 4-fache der anderen Last beträgt - zumindest eine - visuelle oder akustische - Warnung abgibt und/oder ein anderes Sicherheitssystem aktiviert, vorzugsweise eines durch Bremseneingriff und/oder Lenkungseingriff wirkendes elektronisches Stabilisierungssystem des Fahrzeuges selbst und/oder seines Zugfahrzeuges oder Aufliegers.

FIG. 1

FIG. 2

FIG.3a

EP 1 167 094 A1

FIG. 3b

EP 1 167 094 A1

FIG. 4

E5,E6
P5,P6

E3,E4
P3,P4

E1,E2

$e_5$ $e_6$

$e_3$ $e_4$

$e_1$ $e_2$

56.1

34.1

$y_s$

10

56

$\ell_A$

$\ell_{Sattel}$

$\ell$

34

12

FIG. 5

E6,P6

56l

11

E4,P4

56t

34

$s_A$

56

$s_{F56}$

$x_s$

$s_{F34}$

$s_{34}$

$s_{F12}$

$s_{12}$

E2

12

E5,P5

56r

E3,P3

E1

EP 1 167 094 A1

FIG.6a

EP 1 167 094 A1

$F_{R6}$   $F_{R5}$   $F_{R4}$   $F_{R3}$   $F_{R2}$   $F_{R1}$

$F_{R6}$   $F_{R4}$   $F_{R4}$   $F_{R3}$   $F_{R2}$   $F_{R1}$

$F_{R5}$   $\Sigma$   $\Sigma$   $F_{R3}$   $\Sigma$   $F_{R2}$   $\Sigma$   $F_{R1}$   $\Sigma$   $F_{R1}$

$F_{A65}$   $F_{A43}$   $F_{A42}$   $F_{A31}$   $F_{A21}$

$\Sigma$   Diff.

$\Sigma$

Diff.   Prod./2   $S_{12}=S_{34}$

$F_g$   $G_{Mo}$

$F_{Sa}$   $M_{Sa}$

$\Sigma$

Prod./2   $s_{56}$   $G_{Sa}$

Diff.

Quot.   Quot.

Prod.   $\ell_A$   $\Sigma$   $s_{56}$

$y_S$   $x_S$

FIG. 6b

18

**Europäisches Patentamt**

# EUROPÄISCHER RECHERCHENBERICHT

Nummer der Anmeldung

EP 01 11 4202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 373 445 A (YOPP WILFORD T) 13. Dezember 1994 (1994-12-13) | 1 | B60G17/015 B60G11/27 |
| A | * Spalte 4, Zeile 64 - Spalte 5, Zeile 68 * <br> * Abbildung 12 * <br> --- | 2 | |
| X | US 4 783 089 A (WOODS LONNIE K  ET AL) 8. November 1988 (1988-11-08) | 1 | |
| A | * Spalte 4, Zeile 6 - Zeile 28 * <br> * Abbildungen 1-3 * <br> ----- | 2 | |

RECHERCHIERTE SACHGEBIETE (Int.Cl.7)

B60G

Der vorliegende Recherchenbericht wurde für alle Patentansprüche erstellt

| Recherchenort | Abschlußdatum der Recherche | Prüfer |
|---|---|---|
| DEN HAAG | 3. Oktober 2001 | Savelon, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                      

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 01 11 4202

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2001

| Im Recherchenbericht angeführtes Patentdokument | | Datum der Veröffentlichung | Mitglied(er) der Patentfamilie | Datum der Veröffentlichung |
|---|---|---|---|---|
| US 5373445 | A | 13-12-1994 | KEINE | |
| US 4783089 | A | 08-11-1988 | US 4651838 A | 24-03-1987 |

Für nähere Einzelheiten zu diesem Anhang : siehe Amtsblatt des Europäischen Patentamts, Nr.12/82